# EUROPEAN PATENT APPLICATION

(11) **EP 4 760 937 A1**
(43) Date of publication of application: **17.06.2026**
(21) Application number: 24218563.5
(22) Date of filing: 10.12.2024
(51) Int. Cl.: H01M 50/30, H01M 50/209, H01M 50/609, H01M 50/673, A62C 3/16

(54) **BATTERY SYSTEM AND ELECTRIC VEHICLE INCLUDING THE BATTERY SYSTEM**

(71) Applicant: SAMSUNG SDI CO., LTD., Yongin-si, Gyeonggi-do 17084 (KR)
(72) Inventor: Graspeuntner, Johannes, 8010 Graz (AT)
(74) Representative: Gulde & Partner

(57) **Abstract**

The present disclosure refers to a battery system (100) and an electric vehicle including the battery system (100).

The battery system (100) includes a plurality of battery cells (10) stacked along a stacking direction (S) and a fire extinguishing agent (16) configured to generate fire extinguishing gases (22) through an exothermic reaction above a predetermined temperature. Each of the plurality of battery cells (10) includes a venting valve (12) disposed on a terminal side (14) arranged orthogonally to the stacking direction (S). The fire extinguishing agent (16) is arranged to continuously extend above the terminal sides (14) of the plurality of battery cells (10) along the stacking direction (S). Furthermore, the fire extinguishing agent (16) is configured to generate an amount of fire extinguishing gases (22) which extinguishes at least one or more but less than the number of the plurality of battery cells (10) above which the fire extinguishing agent (16) continuously extends.

## Description

### Field of the Disclosure

The present disclosure relates to a battery system and an electric vehicle including the battery system.

### Technological Background

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from the inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and a fire in the battery pack. At this stage, the fire is hard to extinguish.

Condensed aerosol fire suppression is known as a particle-based method of fire extinction in fuel- and combustion-fires. Aerosol is the product that is released when certain substances including a fire extinguishing agent are activated and go into an exothermic reaction producing a variety of gases, heat and most importantly radicals which then prohibit the fire from continuing. In the process of the radicals binding to the combustible gases heat is being consumed, effectively cooling the surroundings. These substances are often referred to as fire-extinguishing-sheets that are activated via heat.

However, the usage of hot aerosols in EV-batteries is limited. A major concern is the additional heat that is produced when the hot aerosol compound is activated as it often triggers neighboring battery cells into additional thermal runaways.

It is thus an object of the present invention improve the safety of the battery system with respect to thermal runaways.

### Summary of Invention

The invention is defined by the appended claims. The description that follows is subjected to this limitation. Any disclosure lying outside the scope of the claims is only intended for illustrative as well as comparative purposes.

According to one aspect of the present disclosure, a battery system is provided. The battery system includes a plurality of battery cells stacked along a stacking direction, wherein each of the plurality of battery cells includes a venting valve disposed on a terminal side, wherein the terminal sides of the plurality of battery cells are arranged orthogonal to the stacking direction; and a fire extinguishing agent configured to generate fire extinguishing gases through an exothermic reaction above a predetermined temperature, wherein the fire extinguishing agent is arranged to continuously extend above the terminal sides of the plurality of battery cells along the stacking direction, and wherein the fire extinguishing agent is configured to generate an amount of fire extinguishing gases which extinguishes at least one or more but less than the number of the plurality of battery cells above which the fire extinguishing agent continuously extends.

The fire extinguishing agent may be configured such that the amount of generated fire extinguishing gases is capable of not extinguishing more than three, more than two or only one of the plurality of battery cells above which the fire extinguishing agent continuously extends.

The number of the plurality of battery cells above which the fire extinguishing agent continuously extends may be at least five, at least ten or at least 20 battery cells.

The fire extinguishing agent may be arranged to continuously extend along the stacking direction and above the venting valves of the plurality of battery cells.

The predetermined temperature may be higher than 270 °C or 290 °C and/or lower than 370 °C or 350 °C.

The fire extinguishing agent may include a compound configured to form potassium nitrate-based aerosol and/or a strontium salt-based aerosol.

The fire extinguishing agent may include a compound consisting of or including potassium nitrate (KNOs) and/or strontium nitrate Sr(NO₃)₂.

The fire extinguishing agent may be embedded (or bound) in a resin matrix, for example an epoxy resin.

The fire extinguishing agent may be formed as a rod or plate continuously extending above the terminal sides of the plurality of battery cells along the stacking direction.

The battery system may further include a housing into which the plurality of battery cells may be accommodated, wherein the fire extinguishing agent may be disposed on a side of the housing facing the accommodated plurality of battery cells.

The fire extinguishing agent may be thermally coupled to the housing such that the housing may serve as a thermal mass for absorbing heat produced by the exothermic reaction of the fire extinguishing agent.

The housing may be a metal housing.

Each of the plurality of battery cells may include a venting valve disposed on a terminal side, wherein the fire extinguishing agent may be configured to at least partially overlap the terminal sides of the plurality of battery cells.

The plurality of battery cells above which the fire extinguishing agent continuously extends may be distributed over one or more battery cell stacks.

According to another aspect of the present disclosure, an electric vehicle including the above-mentioned battery system is provided.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1 illustrates a perspective view of a battery system according to an embodiment, and
Fig. 2 illustrates a perspective view of the battery system during a thermal runaway event.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells stacked along a stacking direction and a fire extinguishing agent configured to generate fire extinguishing gases through an exothermic reaction above a predetermined temperature. Each of the plurality of battery cells includes a venting valve disposed on a terminal side. The terminal sides of the battery cells are arranged orthogonal to the stacking direction. The fire extinguishing agent is arranged to continuously extend above the terminal sides of the plurality of battery cells along the stacking direction. The fire extinguishing agent is configured to generate an amount of fire extinguishing gases which extinguishes at least one or more but less than the number of the plurality of battery cells above which the fire extinguishing agent continuously extends.

In other words, the fire extinguishing agent includes fire extinguishing capabilities which are sufficient to extinguish at least one or more burning battery cells (e.g., burning due to a thermal runaway) but less than the number of battery cells it continuously spans, i.e. above which the fire extinguishing agent continuously extends. The arrangement of the fire extinguishing agent above the terminal sides of the plurality of battery cells may be understood such that the hot gases ejected from the venting valve of the battery cell incurring a thermal runaway may come into contact with the fire extinguishing agent. The fire extinguishing agent may be arranged above the terminal sides of the battery cells without any other battery part therebetween which may hinder the ejected gas from coming into contact with the fire extinguishing agent. The fire extinguishing gases may be hot aerosols.

The heat which is generated by the exothermic reaction of the fire extinguishing agent poses a threat for those battery cells, e.g. adjacent battery cells of the battery cell incurring the thermal runaway which are not (yet) in thermal runaway. Thus, the idea underlying the present invention is that the fire extinguishing agent, which can be triggered as a whole by one single battery cell, e.g. the first battery cell in thermal runaway, possesses enough fire extinguishing capabilities to extinguish the fire of the battery cell in thermal runaway triggering the release of the fire extinguishing gases generated by the fire extinguishing agent. As the fire extinguishing agent does not possess enough fire extinguishing capabilities required to extinguish a fire of every battery cell it spans, the heat produced by the exothermic reaction of the fire extinguishing agent is limited to an extent such that a thermal runaway of (adjacent) battery cells originally not affected by the (first) battery cell having the thermal runaway is prevented. Therefore, it is sufficient to extinguish the first battery cell(s) in thermal runaway to stop thermal propagation. Because battery cells in thermal runaway produce oxygen, the amount of required fire extinguishing agent correlates with the number of battery cells in thermal runaway. However, as the heat produced by the exothermic reaction of the fire extinguishing agent is limited and the limited amount of produced heat does not pose a threat to (adjacent) battery cells not (yet) affected by the thermal runaway to cause further thermal runaways, fire extinguishing capabilities for extinguishing every of the battery cells above which the fire extinguishing agent is disposed are not needed. In addition, as the fire extinguishing agent continuously extends along the stacking direction, it is spread over a large area such that the exothermic heat is widely spread to further reduce the risk of triggering another cell into thermal runaway. Accordingly, a battery system with increased safety with respect to thermal runaways is obtained.

According to one embodiment, the fire extinguishing agent may be configured such that the amount of generated fire extinguishing gases is capable of not extinguishing more than three, more than two or only one of the plurality of battery cells above which the fire extinguishing agent continuously extends. The lower the fire extinguishing capabilities of the fire extinguishing agent are, the less heat is produced during the exothermic reaction thereof and the more safety with respect to thermal runaway is obtained. The fire extinguishing agent may include at least 15 g and/or up to 30 g or 45 g of active fire extinguishing material, e.g. of potassium nitrate (KNOs). For example, 15 g of potassium nitrate (KNOs) may be needed to extinguish a single battery cell in a thermal runaway. Since the fire extinguishing agent continuously extends above the plurality of battery cells, i.e. the active fire extinguishing material is distributed above the plurality of battery cells, it is not necessary to add 15 g of potassium nitrate (KNOs) for each battery cell of the plurality of battery cells into fire extinguishing agent. The reason is that a battery cell of the plurality of battery cells going into thermal runaway uses the potassium nitrate (KNOs) released by the fire extinguishing agent through the exothermic reaction, e.g. up to 15 g thereof, such that further propagation of the thermal runaway is prevented. For example, 15 g of potassium nitrate (KNOs) may be used for a battery capacity of 150 Ah.

According to another embodiment, the number of the plurality of battery cells above which the fire extinguishing agent continuously extends may be at least five, at least ten or at least 20 battery cells. For example, the fire extinguishing agent may continuously extend above each of the battery cells of one (separate) battery cell stack. In other words, a fire extinguishing agent may be provided on each battery cell stack to improve the safety of every battery cell stack with respect to the thermal runaway.

According to another embodiment, the fire extinguishing agent may be arranged to continuously extend along the stacking direction and above the venting valves of the plurality of battery cells. For example, the fire extinguishing agent may be arranged directly above, i.e., without any other battery part therebetween, which may hinder the ejected gas from coming into contact with the fire extinguishing agent, the venting valves of the plurality of battery cells. The closer the fire extinguishing agent is arranged with respect to the heat source, the earlier it may reach the predetermined temperature to perform the exothermic reaction generating fire extinguishing gases.

According to another embodiment, the predetermined temperature may be higher than 270 °C or 290 °C and/or lower than 370 °C or 350 °C. In other words, the fire extinguishing agent may be configured to generate fire extinguishing gases through an exothermic reaction above a predetermined temperature is higher than 270°C or 290 °C and/or lower than 370 °C or 350 °C. For example, the predetermined temperature may be around substantially 300 °C. In general, the predetermined temperature (as well as the reacting time) may be adjustable by additives added to the fire extinguishing agent. These temperature ranges provide a favorable ratio between a minimum temperature of the fire extinguishing agent for performing the exothermic reaction and allowing the fire extinguishing agent to still break further thermal propagation causing further thermal runaways and to extinguish the battery cell having the thermal runaway.

According to another embodiment, the fire extinguishing agent may include a compound configured to form potassium nitrate-based aerosol and/or a strontium salt-based aerosol. To be clear, fire-extinguishing agent is not stored "as is" but rather produced "on demand", e.g. the aerosol microparticles and effluent gases are generated by an exothermic reaction initiated within a condensed, solid, aerosol-forming compound. The potassium nitrate-based hot aerosol fire suppression technology is denoted as K-type system and the strontium salt-based hot aerosol fire suppression technology is denoted as S-type system. Historically, the hot aerosol fire suppression technology went through several generations in which the K-type systems refer to the second generation (gen II) and the S-type systems refer to the third generation (gen III). The K-type systems are very efficient with respect to the fire extinguishing capabilities, while the S-type systems are less deliquescent and generate fewer corrosive byproducts.

According to another embodiment, the fire extinguishing agent may include a compound consisting of or including potassium nitrate (KNOs) and/or strontium nitrate Sr(NO₃)₂. The compound consisting of or including potassium nitrate (KNOs) represents a member of the K-type systems and the compound consisting of or including strontium nitrate Sr(NO₃)₂ represents a member of the S-type systems. The compound consisting of or including potassium nitrate (KNOs) and/or strontium nitrate Sr(NO₃)₂ may further include or consist of various reducers, binders (e.g., organic resin or melamine resin) and additives. The compound consisting of or including potassium nitrate (KNOs) may be configured to form potassium carbonate (K₂CO₃) and potassium bicarbonate (KHCOs) produced from the thermal decomposition of potassium nitrate (KNOs). The KNOs is reacting at temperatures of substantially 270 °C. As the (released) aerosol particles (K₂CO₃, KHCO₃) surround and come into contact with the hot flame of the battery cell having the thermal runaway, they absorb the flame heat energy, breaking down and releasing large concentrations of potassium radicals (K⁺), i.e., ions with an unpaired electron. Those potassium radicals (K⁺) bond with the hydroxide (OH⁻), hydrogen (H⁺), and oxygen (O²⁻) free radicals that typically sustain combustion, producing harmless by-product molecules like potassium hydroxide (KOH) and water (H₂O), and breaking the chain reaction required to keep combustion active. This bonding process is endothermic, and also prevents the combustible material from being able to burn.

According to another embodiment, the fire extinguishing agent may be embedded or bound in a resin matrix, for example, an epoxy resin. Epoxy resins are a cheap carrier material with a melting point between 120 and 180 °C, i.e. below the predetermined temperature of the fire extinguishing agent.

According to another embodiment, the fire extinguishing agent may be formed as a rod or plate continuously extending above the terminal sides of the plurality of battery cells along the stacking direction. The extinguishing agent may be formed as rectangular, cuboidal, triangular, or in any other suitable form fitting the design of the battery system.

According to another embodiment, the battery system may further include a housing into which the plurality of battery cells may be accommodated. The fire extinguishing agent may be disposed on a side of the housing facing the accommodated plurality of battery cells. In other words, the fire extinguishing agent may be disposed on an inner side of the housing. Advantageously, the fire extinguishing agent may be properly protected from external influences.

According to another embodiment, the fire extinguishing agent may be thermally coupled to the housing such that the housing may serve as a thermal mass for absorbing heat produced by the exothermic reaction of the fire extinguishing agent. Accordingly, the chance that the heat produced by the exothermic reaction may propagate to further (adjacent) battery cells to cause further thermal runaways is reduced. The safety of the battery system with respect to thermal runaway is further improved. The term "thermally coupled" may be understood such that a significant heat flow may be provided between the fire extinguishing agent and the housing. The fire extinguishing agent may be adhered to the housing, e.g. by a glue.

According to another embodiment, the housing may be a metal housing, e.g., a housing including or consisting of steel.

According to another embodiment, each of the plurality of battery cells may include a venting valve disposed on a terminal side. The fire extinguishing agent may be configured to at least partially overlap the terminal sides of the plurality of battery cells. In other words, the fire extinguishing agent may be arranged directly above the terminal sides, e.g., directly above the venting valves, such that a path of the hot gases ejected through the venting valve of a battery cell incurring a thermal runaway to the fire extinguishing agent is reduced. In an embodiment, the fire extinguishing agent may be configured to extend only above the terminal sides of the plurality of battery cells.

According to another embodiment, the plurality of battery cells above which the fire extinguishing agent continuously extends may be distributed over one or more battery cell stacks. For example, the fire extinguishing agent may meander along the plurality of battery cell stacks. Accordingly, the assembly of the battery system may be facilitated since only one part for several battery cell stacks (instead of several parts, e.g. one for each battery cell stack) has to be inserted.

Further, the invention pertains to an electric vehicle including the battery system as disclosed herein. The features and advantages described in view of the above-mentioned battery system may be analogously applied to the electric vehicle.

### Specific Embodiments

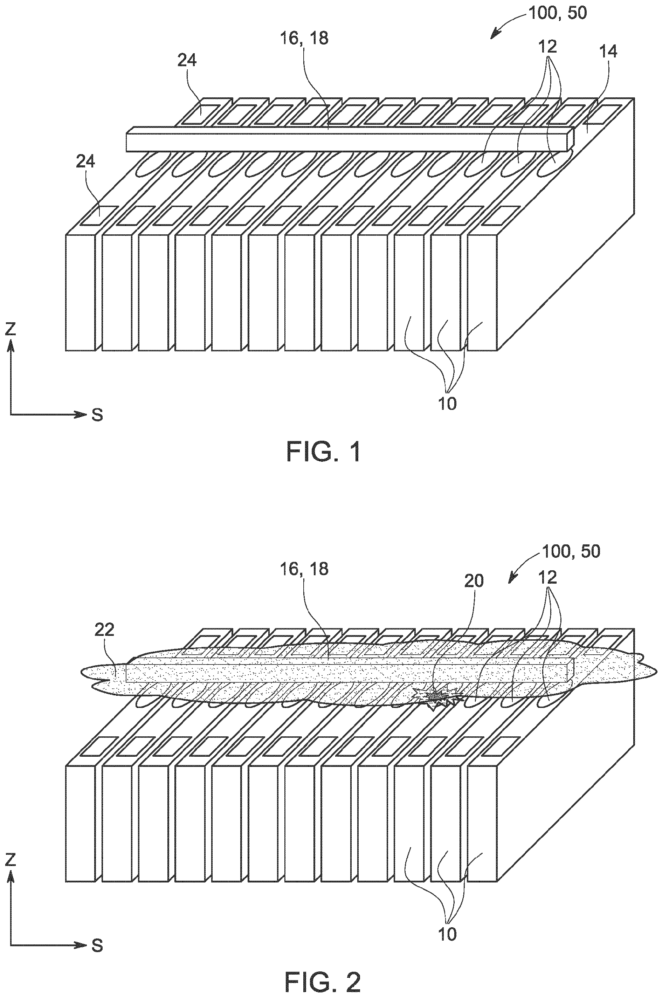

Fig. 1 is a perspective view of a battery system 100 according to an embodiment.

The battery system 100 includes a plurality of battery cells 10, e.g. a number of twelve as shown in Fig. 1, stacked along a stacking direction S and a fire extinguishing agent 16 configured to generate fire extinguishing gases 22 (see Fig. 2) through an exothermic reaction above a predetermined temperature.

The battery cells 10 may be prismatic cells. Each of the plurality of battery cells 10 includes a venting valve 12 disposed on a terminal side 14. The plurality of battery cells 10 may further include a pair of electrode terminals 24 arranged on the terminal side 14, e.g. on opposite ends of the terminal side 14 along a direction orthogonal to the stacking direction S. The venting valves 12 may be arranged between the electrode terminals 24. The terminal sides 14 of the battery cells 10 are arranged orthogonal to the stacking direction S. For example, the terminal sides 14 of the battery cells 10 may be arranged on the top sides of the battery cells 10 with respect to a top direction Z arranged perpendicular to the stacking direction S. The top direction Z may correspond to the height direction of the battery cells 10. In other words, the venting valves 12 are arranged to face towards the top of the battery system 100.

The fire extinguishing agent 16 is arranged to continuously extend above the terminal sides 14 of the plurality of battery cells 10 along the stacking direction S. In detail, the fire extinguishing agent 16 is arranged to continuously extend above the venting valves 12 of the plurality of battery cells 10 along the stacking direction S. Accordingly, hot gases ejected through the venting valve 12 of an affected battery cell 10 incurring a thermal runaway come straight into contact with the fire extinguishing agent 16. The fire extinguishing agent 16 may be formed as a rod 18 or plate.

The fire extinguishing agent 16 is configured to generate an amount of fire extinguishing gases 22 which extinguish at least one or more battery cells but less than the number of the plurality of battery cells 10 over which the fire extinguishing agent 16 continuously extends. In the embodiment shown in the figures, the fire extinguishing agent 16 is configured to generate an amount of fire extinguishing gases 22 which extinguishes up to three of the twelve battery cells 12 above which the fire extinguishing agent 16 is disposed. However, this is merely an example and the present invention is not limited thereto.

The fire extinguishing agent 16 may include a compound consisting of or including potassium nitrate (KNOs) and/or strontium nitrate Sr(NO₃)₂. The compound consisting of or including potassium nitrate (KNOs) may be configured to form potassium carbonate (K₂CO₃) and potassium bicarbonate (KHCOs) produced from the thermal decomposition of potassium nitrate (KNOs). The KNOs is reacting at temperatures of substantially 270 °C or more. When the aerosol particles (K₂CO₃, KHCOs) come into contact with a hot flame of a battery cell 10 having a thermal runaway, they absorb the flame heat energy, breaking down and releasing large concentrations of potassium radicals (K⁺), i.e. ions with an unpaired electron. Those potassium radicals (K⁺) bond with the hydroxide (OH⁻), hydrogen (H⁺) and oxygen (O²⁻) free radicals that typically sustain combustion, producing harmless by-product molecules like potassium hydroxide (KOH) and water (H₂O), and breaking the chain reaction required to keep combustion active. This process is endothermic and also prevents the combustible material from being able to burn.

Fig. 2 is a perspective view of the battery system 100 as shown in Fig. 1 during a thermal runaway event 20 of one of the battery cells 10.

During the thermal runaway event 20 of a battery cell 10 of the plurality of battery cells 10, hot particles are ejected from the venting valve 12. These particles heat the fire extinguishing agent 16 above the predetermined temperature such that the fire extinguishing agent 16 generates and emits the fire extinguishing gases 22 to its environment. The fire extinguishing gases 22 surround and extinguish the fire caused by the thermal runaway event 20 of the affected battery cell 10 and cool the environment down.

The heat which is generated by the exothermic reaction of the fire extinguishing agent 16 generally poses a threat for the adjacent battery cells of the battery cell incurring the thermal runaway event 20. However, the fire extinguishing agent 16, which can be triggered as a whole by one single battery cell 10, e.g. the first battery cell 10 with the thermal runaway event 20, possesses enough fire extinguishing capabilities to extinguish the fire of the battery cell 10 in thermal runaway. As the fire extinguishing agent 16 does not possess enough fire extinguishing capabilities required to extinguish fires of every battery cell 10 above which it is disposed, the heat produced by the exothermic reaction of the fire extinguishing agent is limited to an extent such that further thermal runaway events caused by the thermal runaway event 20 as shown in Fig. 2 are prevented. In addition, as the fire extinguishing agent 16 continuously extends along the stacking direction S, it is spread over a large area such that the exothermic heat is widely spread. Accordingly, the safety of the battery system 100 with respect to thermal runaways is improved.

As shown in the figures, the fire extinguishing agent 16 may be arranged directly above the venting valves 12 of the plurality of battery cells 10, i.e. without any other part of the battery system 100 therebetween hindering the ejected gas from coming into contact with the fire extinguishing agent 16. The closer the fire extinguishing agent 16 is arranged with respect to the heat source, the earlier it may reach the predetermined temperature to generate fire extinguishing gases 22 through the exothermic reaction.

The battery system 100 may further include a housing (not shown) into which the plurality of battery cells 10 may be accommodated. The fire extinguishing agent 16 may be disposed on a side of the housing facing the accommodated plurality of battery cells 10. In other words, the fire extinguishing agent 16 may be disposed on an inner side of the housing. Advantageously, the fire extinguishing agent 16 may be properly protected from external influences. For example, the fire extinguishing agent 16 may be disposed on an inner side of the top cover of the housing.

In addition, the fire extinguishing agent 16 may be thermally coupled to the housing such that the housing may serve as a thermal mass for absorbing heat produced by the exothermic reaction of the fire extinguishing agent 16. Accordingly, the chance that the heat produced by the exothermic reaction may propagate to further (adjacent) battery cells 10 to cause further thermal runaways is reduced. The safety of the battery system 100 with respect to thermal runaway is further improved. The fire extinguishing agent 16 may be adhered to the housing, e.g., by a glue. The housing may be a metal housing, e.g., a housing including or consisting of steel.

Although the battery system 100 is shown in the figures as including one battery cell stack 50, the battery system 100 may, however, also include more than one battery cell stack 50, e.g. a plurality of battery cell stacks 50. The plurality of battery cell stacks 50 may either have each one fire extinguishing agent 16 or share one fire extinguishing agent 16 configured to extend, e.g., meander, through the battery cells stacks 50.

### Reference signs

- 10: battery cell
- 12: venting valve
- 14: terminal side
- 16: fire extinguishing agent
- 18: rod
- 20: thermal runaway event
- 22: fire extinguishing gases
- 24: electrode terminals
- 50: battery cell stack
- 100: battery system

- S: stacking direction

## Claims

1. A battery system (100), comprising:
a plurality of battery cells (10) stacked along a stacking direction (S), each of the plurality of battery cells (10) comprising a venting valve (12) disposed on a terminal side (14), wherein the terminal sides (14) of the plurality of battery cells (10) are arranged orthogonal to the stacking direction (S); and
a fire extinguishing agent (16) configured to generate fire extinguishing gases (22) through an exothermic reaction above a predetermined temperature, wherein the fire extinguishing agent (16) is arranged to continuously extend above the terminal sides (14) along the stacking direction (S), and
wherein the fire extinguishing agent (16) is configured to generate an amount of fire extinguishing gases (22) which extinguishes at least one or more but less than the number of the plurality of battery cells (10) above which the fire extinguishing agent (16) continuously extends.

2. The battery system (100) as claimed in claim 1, wherein the fire extinguishing agent (16) is configured such that the amount of generated fire extinguishing gases (22) is capable of not extinguishing more than three, more than two or only one of the plurality of battery cells (10) above which the fire extinguishing agent (16) continuously extends.

3. The battery system (100) as claimed in claim 2, wherein the number of the plurality of battery cells (10) above which the fire extinguishing agent (16) continuously extends is at least five, at least ten or at least 20 battery cells (10).

4. The battery system (100) as claimed in any one of the preceding claims, wherein the fire extinguishing agent (16) is arranged to continuously extend along the stacking direction (S) and above the venting valves (12) of the plurality of battery cells (10).

5. The battery system (100) as claimed in any one of the preceding claims, wherein the predetermined temperature is higher than 270 °C or 290 °C and/or lower than 370 °C or 350 °C.

6. The battery system (100) as claimed in any one of the preceding claims, wherein the fire extinguishing agent (16) comprises a compound configured to form potassium nitrate-based aerosol and/or a strontium salt-based aerosol.

7. The battery system (100) as claimed in claim 6, wherein the fire extinguishing agent (16) comprises a compound consisting of or comprising potassium nitrate (KNOs) and/or strontium nitrate Sr(NO₃)₂.

8. The battery system (100) as claimed in any one of the preceding claims, wherein the fire extinguishing agent (16) is embedded in a resin matrix.

9. The battery system (100) as claimed in any one of the preceding claims, wherein the fire extinguishing agent (16) is formed as a rod (18) or plate continuously extending above the terminal sides (14) of the plurality of battery cells (10) along the stacking direction (S).

10. The battery system (100) as claimed in any one of the preceding claims, further comprising a housing into which the plurality of battery cells (10) is accommodated, wherein the fire extinguishing agent (16) is disposed on a side of the housing facing the accommodated plurality of battery cells (10).

11. The battery system (100) as claimed in claim 10, wherein the fire extinguishing agent (16) is thermally coupled to the housing such that the housing serves as a thermal mass for absorbing heat produced by the exothermic reaction of the fire extinguishing agent (16).

12. The battery system (100) as claimed in claim 10 or 11, wherein the housing is a metal housing.

13. The battery system (100) as claimed in any one of the preceding claims, wherein the fire extinguishing agent (16) is configured to at least partially overlap the terminal sides (14) of the plurality of battery cells (10).

14. The battery system (100) as claimed in any one of the preceding claims, wherein the plurality of battery cells (10) above which the fire extinguishing agent (16) continuously extends are distributed over one or more battery cell stacks (50).

15. An electric vehicle comprising the battery system (100) as claimed in any one of the preceding claims.
